# EUROPÄISCHE PATENTSCHRIFT

(11) **EP 0 572 905 B1**
(45) Veröffentlichungstag und Bekanntmachung des Hinweises auf die Patenterteilung: **10.07.1996**
(21) Anmeldenummer: 93108461.0
(22) Anmeldetag: 26.05.1993
(51) Int. Cl.: A01D 34/54

(54) **Vorrichtung zur Höheneinstellung einer Schneideeinheit eines Mähers, insbesondere eines Spindelmähers**
Device for height controlling of the cutting unit of a mower, especially of a reel mower
Dispositif pour régler la hauteur de l'unité de couteau d'une tondeuse, notamment d'une tondeuse à entraînement par roues latérales

(30) Priorität: 05.06.1992 US 894493
(43) Veröffentlichungstag der Anmeldung: 08.12.1993
(73) Patentinhaber: DEERE & COMPANY, Moline, Illinois 61265 (US)
(72) Erfinder: Reichen, Ronald Lee, Horicon, Wisconsin 53032 (US)
(74) Vertreter: Feldmann, Bernhard

(56) Entgegenhaltungen:
- GB-A- 217 127
- GB-A- 225 383
- US-A- 829 562
- US-A- 2 671 300

## Beschreibung

Die Erfindung bezieht sich auf eine Schneideeinheit eines Mähers, insbesondere eines Spindelmähers, mit einer Vorrichtung zur Höheneinstellung der Schneideeinheit, die im Einsatz auf dem Boden über Roll- oder Gleitkörper geführt wird, wobei an jedem Roll- oder Gleitkörper mindestens ein Stehlager angeschlossen ist, das mit der Schneideeinheit in unterschiedlichen Höhenstellungen verbindbar ist.

Derartige Mäher werden in der Regel in Gruppen an einem Kleinschlepper aufgehängt und insbesondere auf Golfplätzen eingesetzt, wo es auf einen präzisen Rasenschnitt unterschiedlicher Höhe auf den Spielflächen und Spielwegen besonders ankommt. Die Rasenflächen eines Golfplatzes sind erforderlichenfalls mehrmals täglich zu schneiden, weshalb manche Golfplatzbetreiber für die einzelnen Grashöhen unterschiedliche Rasenmähmaschinen mit fest eingestellten Schnitthöhen benutzen, um sich das jeweilige Einstellen der Schnitthöhe zu ersparen. Durch die in Gruppen angeordneten Schneideeinheiten läßt sich eine große Arbeitsbreite erzielen, was aber bei einem auf einem Golfplatz erforderlichen präzisen Rasenschnitt voraussetzt, daß bei Spindelmähern die unterhalb jeder Spindel gelegenen Gegenschneiden alle exakt in derselben Ebene angeordnet sein müssen, wobei diese Ebene parallel zum Boden verlaufen muß.

Bei allen derartigen Mähern sind die Schnitthöhen einstellbar, wozu die unterschiedlichsten Vorrichtungen bekannt geworden sind. Bei der Vorrichtung, von der die Erfindung ausgeht (Profi-Rasenmäher 3365), sind an der Vorder- und Rückseite jeder Schneideeinheit im Bereich der außenliegenden Kanten jeweils zwei eine vertikale Buchse aufnehmende Platten angeschraubt. Durch die Buchsen sind die Stehlager geführt, die an den Buchsen in verschiedenen Höhenstellungen stufenlos festgelegt werden können. Die beiden vorderen Stehlager nehmen an ihren bodenseitigen Enden eine sich über die Breite der Spindel erstreckende Vorderrolle, die nicht unbedingt vorgesehen sein muß, und die beiden rückwärtigen Stehlager eine sich ebenfalls über die Breite der Spindel erstreckende Hinterrolle auf. Im Einsatz rollt jede Schneideeinheit über diese beiden Rollen über den Rasen. Zur Höheneinstellung sind alle Stehlager auf ihrer gesamten Länge mit Gewinde versehen, wobei die Festlegung gegenüber den Buchsen durch jeweils eine von oben und von unten gegen die Buchsen anliegende und auf die Stehlager aufschraubbare Einstellmutter erfolgt. Zum Einstellen der Schnitthöhe benötigt man eine Justierstange mit zwei Einstellschrauben. Der Einstellvorgang beispielsweise zum Höherstellen der Rollen verläuft in mehreren Arbeitsgängen. Zunächst wird jede Schneideeinheit in ihre Transportstellung gehoben und dort verriegelt. Auf Wunsch kann sie auch abgebaut werden. Danach werden die unteren Einstellmuttern gelöst und die oberen Einstellmuttern an jedem Ende der Schneideeinheit abwechselnd auf beiden Seiten der Schneideeinheit im Uhrzeigerdrehsinn gedreht. Die eine Schraube an der Justierstange wird auf die Schnitthöhe eingestellt, gesichert und mit ihrem Kopf an dem einen Ende der Gegenschneide aufgehängt. Die Justierstange befindet sich dann unterhalb der Gegenschneide und der Rollen. Die andere Schraube an der Justierstange wird solange gedreht, bis die Justierstange parallel zur Gegenschneide verläuft. Danach werden die oberen Einstellmuttern gelöst bzw. solange weitergedreht, bis die Rollen die Justierstange berühren. Um dies festzustellen, wird die Rolle gedreht und gegebenenfalls auch die untere Einstellmutter vorsichtig gedreht. Sodann werden die oberen Einstellmuttern verriegelt und das gesamte Verfahren an der anderen Seite der Gegenschneide wieder wiederholt. Auf diese Weise läßt sich eine präzise Einstellung der Schnitthöhe durchführen, wobei die Schneideeinheit an allen ihren vier Ecken individuell einstellbar ist. Es ist aber offensichtlich, daß ein solches Verfahren zeitaufwendig ist und daß, wenn die Einstellung auf dem Feld erfolgt, Werkzeuge und Hilfsmittel, wie die Justierstange mitgeführt werden müssen.

Für einen verstellbaren Kultivatorzinken wurde bereits vorgeschlagen (US-A-829 562), einen gebogenen gestellfesten Arm mit einer Außenverzahnung zu versehen, wobei der Zinken selbst mit einen Gewindestab fest verbunden ist, auf dessen Ende eine mit Innenverzahnung versehene Kappe aufsetzbar und durch eine Mutter sicherbar ist. Die Innenverzahnung greift dann im verspannten Zustand in die Außenverzahnung ein.

In dem einen Rasenmäher betreffenden Dokument GB-A-217 127, in dem sich keine Angaben finden, ob und gegebenenfalls wie die Schnitthöhe einzustellen ist, wird eine Vorrichtung beschrieben, wie ein handgeführter Spindelmäher, dessen einzige Spindel, wie seinerzeit üblich, sich zwischen den beiden die Spindel antreibenden und auf dem Boden laufenden Antriebsrädern befindet, auch so eingesetzt werden kann, daß Graskanten an tiefer gelegenen Fußwegen gemäht werden können. Hierzu ist eine einzige Rolle oder ein einziges Hilfsrad innen liegend neben dem zugehörigen Antriebsrad, das in einem solchen Falle dann in der Luft hängt und keinen Bodenkontakt hat, mit einer Schutzabdeckung des Mähers derart höhenverstellbar verbunden, daß es beim Graskantenmähen dieselbe Höhenlage wie die Antriebsräder einnimmt. Im einzelnen ist zur Höheneinstellung die freitragende Radspindel in eine Buchse einsetzbar, an die eine Zahnstange angeformt ist. Die Zahnstange hat ein Langloch, daß von einer Schraube durchsetzt ist, die in eine Gewindebohrung in der Schutzabdeckung einschraubbar ist. Die Schutzabdeckung ist mit Gegenzähnen versehen, und die Länge des Langloches bestimmt den maximalen Verstellbereich.

Das Dokument GB-A-225 383 offenbart eine Verbesserung oder Modifizierung der Vorrichtung nach der vorgenannten GB-A-217 127. Bei dieser Ausführung ist das Hilfsrad an einer beidseitig gestellfesten Querstange vertikal verstellbar angeschlossen und damit besser geeignet, bei einem Kantenschneiden das Gerätegewicht aufzufangen. Die Querstange hat einen nach unten weisenden Arm mit einem nach unten hin offenen Vertikalschlitz. Das Hilfsrad ist in einem U-förmigen Rollbügel gelagert, der an seinem Steg mit einem nach oben weisenden Arm versehen ist. Auch dieser Arm weist einen Vertikalschlitz auf, der allerdings nach oben offen ist. Beide Arme sind beiderseits ihrer Vertikalschlitze mit Riffelungen versehen, die ineinandergreifen, wenn die beiden Arme über eine durch die Vertikalschlitze geführte Schraubverbindung miteinander verspannt sind. Die Länge des nach unten offenen Vertikalschlitzes bestimmt den maximalen Verstellweg.

Die Dokumente GB-A-217 127 und GB-A-225 383 offenbaren damit nur eine einzige Verstellmöglichkeit, allerdings nicht zur Schnitthöheneinstellung

Die mit der Erfindung zu lösende Aufgabe wird darin gesehen, Vorkehrungen zu treffen, damit die Schnitthöheneinstellung eines Mähers einfacher durchgeführt werden kann, insbesondere sollen die Voraussetzungen für eine Vielzahl von Höhenstellungen bei Verwendung keiner Werkzeuge oder eines oder einiger wenige geschaffen werden. Dies Aufgabe ist nach der Erfindung dadurch gelöst worden, daß jedem Stehlager ein Stangenteil zugeordnet ist, jeder Stangenteil mit dem zugehörigen Stehlager verspannbar ist, jedes Stehlager oder jeder Stangenteil wenigstens einen seitlich vorspringenden Teil aufweist, jeder Stangenteil oder jedes Stehlager mit wenigstens zwei übereinander angeordneten Aussparungen versehen ist, in die der seitlich vorspringende Teil einsetzbar ist, und daß jeder Stangenteil mit einer Vorrichtung zur Feineinstellung versehen und über diese Vorrichtung mit der Schneideeinheit höhenverstellbar verbunden ist. Hiermit ist zunächst eine erste Einstellmöglichkeit gegeben, die auf mit Gewinde versehene Stehlager verzichtet und somit kostengünstiger herzustellen und weniger störanfällig ist. Durch einfaches manuelles Versetzen des Stehlagers läßt sich eine neue Höhenposition festlegen. Der vorspringende Teil sichert in einfachster Weise die vertikale Relativlage von Stehlager und Stangenteil, wobei die jeweilig eingestellte Position durch ein Spannmittel gesichert werden kann, das im Falle eines Gewindebolzens und einer Flügelmutter zu seiner Sicherung keines Werkzeuges bedarf. Wird statt der Flügelmutter einer Sechskantmutter der Vorzug gegeben, so ist nur ein Schraubenschlüssel erforderlich. Die Verstellung kann in kurzer Zeit auf dem Feld ohne weitere Hilfsmittel ausgeführt werden. Durch die besondere Verbindung der Stangenteile mit der Schneideeinheit wird in einfacher Weise ein weiterer Verstellbereich erzielt.

Eine Vielzahl von vertikalen Stellungen wird nach einem weiteren Vorschlag der Erfindung dann erreicht, wenn der Stangenteil und das Stehlager mit wenigstens einer vertikalen Reihe einander sich abwechselnder seitlicher Vorsprünge und Aussparungen versehen ist. Die Verstellung findet dann in einer Vielzahl von Stufen statt. Jede einzelne Stufe kann klein gehalten werden, und die Größe einer Stufe richtet sich nach den Abmessungen der vorspringenden Teile bzw. der Aussparungen. Durch einfaches Abzählen der Stufen läßt sich jedes Stehlager um denselben Betrag verstellen.

Eine kostengünstige Herstellung läßt sich ferner erzielen, wenn die seitlichen Vorsprünge als Zähne und die Aussparungen als die zwischen den Zähnen liegenden Zahnlücken ausgebildet sind. Solche Zahnreihen lassen sich auch leicht reinigen, wenn sich im Einsatz die Zahnlücken mit Grasresten einmal zugesetzt haben sollten.

Nach der Erfindung wird ferner vorgeschlagen, daß das Stehlager oder der Stangenteil mit einem vertikalen Langloch versehen ist, durch das ein Spannelement am Stangenteil oder Stehlager steckbar ist. Die Länge des Langloches bestimmt damit den Verstellbereich bei der ersten Verstellmöglichkeit. In diesem Bereich braucht das Spannelement beim Verstellvorgang nicht entfernt, sondern nur gelockert zu werden.

Ein dritter Bereich von Verstellmöglichkeiten ergibt sich nach einem weiteren Vorschlag der Erfindung dadurch, daß das Spannelement als Schraube ausgebildet ist, die in eine von wenigstens zwei Durchgangsöffnungen im Stangenteil oder Stehlager einsetzbar ist. Die Schraube ist als Losteil ausgebildet und ist bei etwaigem Verschleiß leicht austauschbar.

Vorteilhaft können das Stehlager und der Stangenteil mit zwei seitlichen Abstand aufweisenden vertikalen Reihen von Zähnen versehen sein, wobei die Zahnreihen am Stehlager oder am Stangenteil kürzer sind als die Zahnreihen am Stangenteil oder am Stehlager. Durch die unterschiedlich langen Zahnreihen lassen sich Fertigungsungenauigkeiten leichter ausgleichen, weshalb die Zahnreihen größere Toleranzen haben können.

Die Feineinstellung kann stufenlos gestaltet werden, wenn bei einer an einem Rahmen angeordneten Schneideeinheit der Stangenteil mit einer sich vertikal erstreckenden Gewinde aufweisenden Stange verbunden ist, der Rahmen eine die Stange aufnehmende Öffnung aufweist und wenn die Stange mit dem Rahmen über zwei auf das Gewinde der Stange aufschraubbare Muttern verbindbar ist, von denen eine von unten und die andere von oben gegen den Rahmen anliegt. Hiermit kann innerhalb der Stufen der ersten oder zweiten Verstellmöglichkeit stufenlos verstellt werden, so daß die gesamte Höheneinstellung ebenfalls stufenlos ist. Eine besonders betriebssichere Verspannung des Stangenteils mit der Schneideeinheit läßt sich dann erreichen, wenn der Stangenteil mit dem Rahmen verschraubbar ist und wenn die Schraubverbindung in einem Langloch am Rahmen geführt ist.

In der Zeichnung ist ein nachfolgend näher erläutertes Ausführungsbeispiel der Erfindung dargestellt. Es zeigt:
- Fig. 1: eine Schneideeinheit eines Spindelmähers in perspektivischer Ansicht,
- Fig. 2: die Schneideeinheit nach Fig. 1 in Seitenansicht,
- Fig. 3: eine der Höheneinstellvorrichtungen für die Schneideeinheit nach Fig. 2 in auseinandergezogener Darstellung,
- Fig. 4: einen Schnitt nach der Linie 4:4 in Fig. 2,
- Fig. 5: ein Stehlager der Höheneinstellvorrichtung in Blickrichtung der Linie 5:5 in Fig. 3 und
- Fig. 6: einen Stangenteil der Höheneinstellvorrichtung in Blickrichtung der Linie 6:6 in Fig. 3.

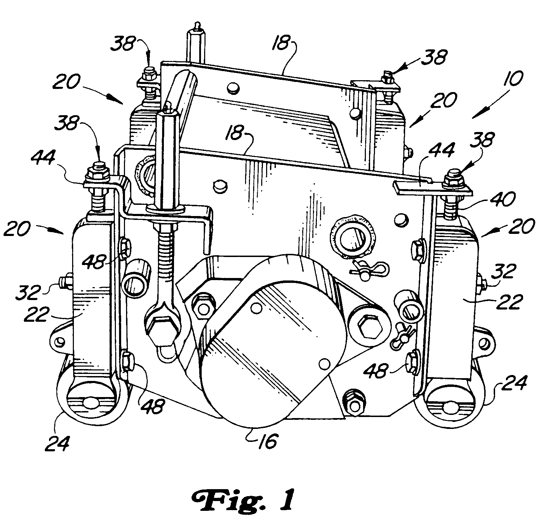

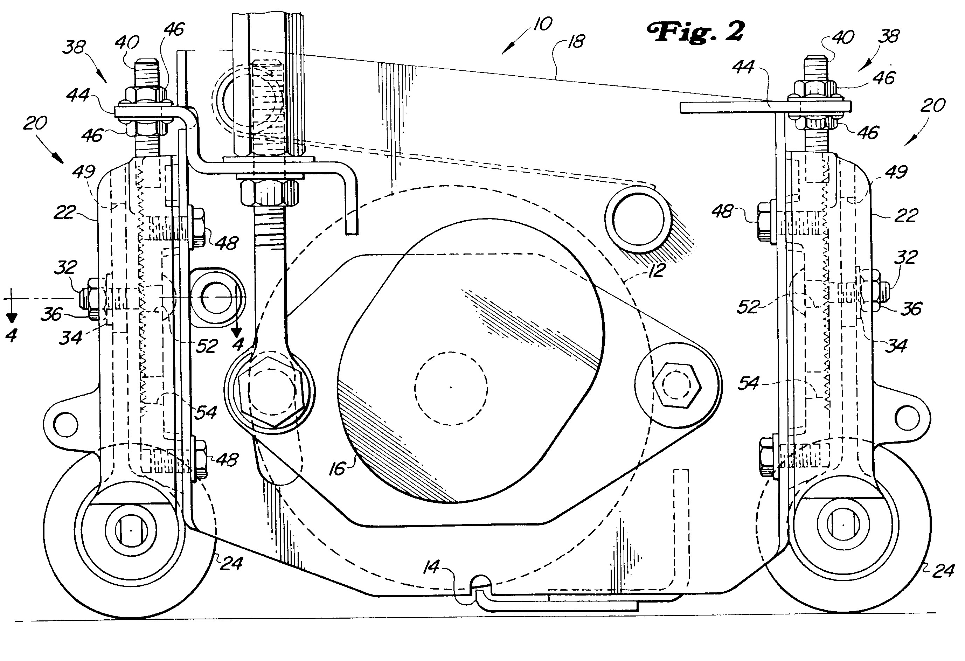

In den Fig. 1 und 2 der Zeichnung ist mit 10 die Schneideeinheit eines Spindelmähers bezeichnet. Diese besteht im wesentlichen aus einer um eine horizontale Welle umlaufende Messerspindel 12 mit einer Vielzahl von zylindrisch angeordneten Messern und einem in Bodennähe angebrachten Gegenmesser 14. Bei dem vorliegenden Ausführungsbeispiel wird die Messerspindel 12 über einen Hydromotor 16 angetrieben, der an einer Seite eines Messerspindel 12 und Gegenmesser 14 aufnehmenden Rahmens 18 angeordnet ist.

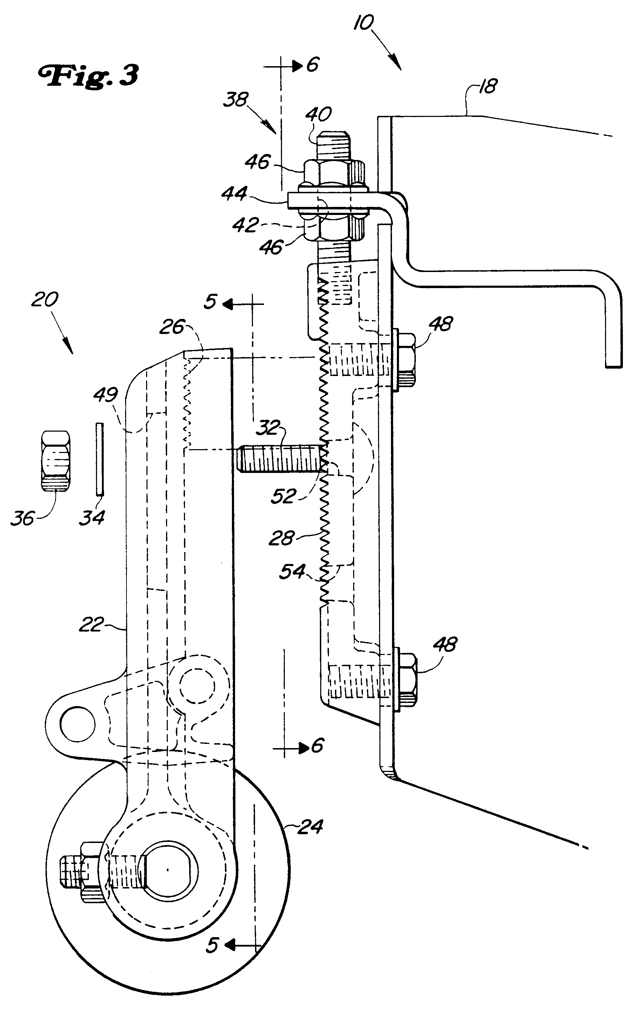

Derartige Spindelmäher können von Hand geschoben werden, sind aber in der Regel in mehreren Einheiten zur Vergrößerung der Gesamtschnittbreite an einem Kleinschlepper aufgehängt und werden insbesondere auf Parkanlagen und Golfplätzen, die einen präzisen Rasenschnitt erfordern, eingesetzt. Jede Schneideeinheit 10 bzw. der Rahmen 18 einer jeden Schneideeinheit ist von oben gesehen viereckig oder etwa viereckig ausgebildet und höhenverstellbar, damit das Gras je nach den unterschiedlichen Anforderungen in verschiedenen Schnitthöhen geschnitten werden kann. Im vorliegenden Fall ist je eine Höheneinstellvorrichtung 20 im Bereich der vier Ecken des Rahmens 18 jeder Schneideeinheit 10 vorgesehen, über die das vordere Ende und das rückwärtige Ende des im Einsatz auf dem Rasen abrollenden Rahmens 18 eingestellt werden können. Die Höheneinstellvorrichtungen sind am besten aus den Fig. 2 oder 3 erkennbar, aus denen zu ersehen ist, daß jede ein Stehlager 22 aufweist, an deren Enden eine auf dem Boden laufende und in den Ansprüchen als Roll- oder Gleitkörper bezeichnete Rolle 24 angeschlossen ist. Anstelle der beiden Rollen am vorderen und rückwärtigen Ende kann auch je eine durchgehende Walze vorgesehen sein. Einzelne Rollen können auch als auf dem Boden geführte Gleitkörper, beispielsweise in Form von Kufen oder Kugelteilen, ausgebildet sein.

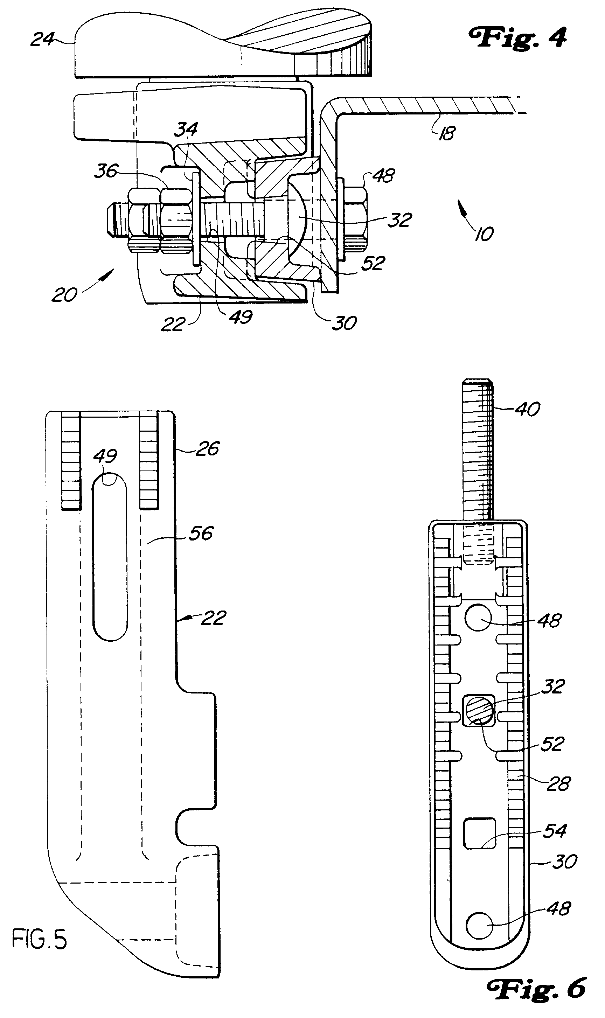

Die nachfolgende Beschreibung bezieht sich auf eine einzige Höheneinstellvorrichtung 20 mit dem Verständnis, daß an einer Schneideeinheit 10 vier identische Höheneinstellvorrichtungen vorgesehen sein können. Jedes Stehlager 22 erstreckt sich von der Rolle oder Walze 24 aus gesehen nach oben und ist an seinem oberen Ende, wie insbesondere aus den Fig. 3 und 5 hervorgeht, mit wenigstens einer Reihe untereinanderliegender Zähne 26 ausgerüstet. Fig. 5 weist zwei relativ kurze mit gegenseitigem Abstand angeordnete Reihen von Zähnen 26 aus, unterhalb derer sich ein unverzahnter glatter Abschnitt 56 befindet und die im verspannten Zustand in Zähne 28 eingreifen, die an einem Stangenteil 30 vorgesehen sind. Aus Fig. 6 ist erkennbar, daß die beiden Reihen Zähne 28 am Stangenteil 30 wesentlich länger ausgebildet sind, als die zwei Reihen am Stehlager 22. Der Stangenteil 30 ist Bestandteil des Rahmens 18 und im Ausführungsbeispiel mit diesem verschraubbar. Die Relativlage des Stangenteils 30 gegenüber dem Rahmen 18 ist insofern damit nicht veränderbar. An den Stangenteil 30 ist das Stehlager 22 in einer Vielzahl von Höhenstellungen über eine Schraube 32, die mit ihrem konisch und quadratisch ausgebildeten oberen Schaftteil in den Stangenteil 30 eingesetzt ist und sich mit ihrem Ende durch ein Langloch 49 in dem Stehlager 22 erstreckt, anschließbar. Über eine auf das aus dem Stehlager 22 austretende Ende der Schraube 32 aufsteckbare Unterlegscheibe 34 und eine auf dieses Ende aufschraubbare Mutter 36 erfolgt die Sicherung. Ist die Mutter 36 fest angezogen, dann sind das Stehlager 22 und der Stangenteil 30 miteinander betriebssicher verbunden. Sobald aber die Mutter 36 wieder gelockert ist, kann das Stehlager 22 gegenüber dem Stangenteil 30 höhenverstellt werden. Dies wiederum resultiert in einer Höhenverstellung der Schneideeinrichtung 10 mit Bezug auf die Bodenoberfläche und somit der Schnitthöhe.

Um den Verstellbereich des Stehlagers 22 gegenüber dem Stangenteil 30 noch zu vergrößern, können in dem Stangenteil 30 mehrere untereinander liegende Durchgangsöffnungen 52, 54 für die Schraube 32 vorgesehen sein. Die Durchgangsöffnungen 52, 54 sind dem Schaftteil der Schraube 32 entsprechend konisch und quadratisch ausgebildet.

Neben dieser Einstellmöglichkeit kann noch eine Vorrichtung 38 zur Feineinstellung vorgesehen werden. Diese besteht aus einer Gewindestange 40, die in das obere Ende des Stangenteils 30 eingesetzt ist und sich von diesem aus gesehen nach oben erstreckt. Das freie Ende der Gewindestange 40 dient zur Aufnahme des Rahmens 18 und ist hierzu durch eine Öffnung 42 in einem mit dem Rahmen 18 verbundenen endseitig abgekröpften Ausleger 44 geführt. Die Abkröpfung befindet sich mit vertikalem Abstand über dem oberen Ende des Stangenteils 30 und die Sicherung erfolgt durch eine obere und eine untere auf die Gewindestange 40 aufschraubbare und gegen die Ober- und Unterseite des Auslegers 44 anliegende Mutter 46. Die jeweilige Lage der beiden Muttern 46 bestimmt die vertikale Stellung des Rahmens 18 mit Bezug auf die Gewindestange 40. Zur weiteren Sicherung des Stangenteils 30 gegenüber dem Rahmen 18 können noch zwei Schrauben 48 dienen, die durch vertikale Langlöcher in einem mit dem Rahmen 18 verbundenen Teil geführt und in dem Stangenteil 30 eingeschraubt sind. Sie werden festgezogen, nachdem eine Feineinstellung erfolgt ist.

Um nun die Schnitthöhe einzustellen oder neu einzustellen, wird die Schneideeinheit 10 oder werden die Schneideeinheiten 10, sofern sie an einem Kleinschlepper angeschlossen ist oder sind, zunächst in ihre Transportstellung verfahren und dort verriegelt, in der die Rollen 24 oder Walzen keinen Bodenkontakt mehr haben. Danach werden von einer Bedienungsperson die Schrauben 32 gelockert, was im Prinzip auch bereits erfolgen kann, wenn sich die Schneideeinheiten in ihren Arbeitsstellungen befinden. Die Schraube 32 an jeder Höheneinstellvorrichtung 20 wird nur soweit gelockert, daß die Zähne 26 und 28 außer Eingriff kommen können, wonach die Bedienungsperson von Hand das Stehlager 22 nach oben oder unten in eine neue vertikale Stellung versetzen kann, in der die Zähne 26 und 28 wieder ineinander greifen. In der neuen Position wird die Schraube 32 wieder angezogen. Dieser erste Stellbereich ist durch die vertikale Länge des Langloches 49 bestimmt.

Die Zähne 26 und 28 sind aus Kostengründen vorzugsweise dreieckförmig ausgebildet und haben beim Stehlager und Stangenteil eine identische Form, wobei aber auch andere gegenseitige Rasterstellen, beispielsweise sich abwechselnde Nocken und Nuten, Verwendung finden können, die so auszugestalten sind, daß eine vertikale Festlegung in wenigstens zwei Höhenstellungen möglich ist. Hierzu wurde bereits ein seitlich vorspringender Teil am Stehlager oder an dem Stangenteil und zwei untereinanderliegende den vospringenden Teil aufnehmende Aussparungen am Stangenteil oder dem Stehlager genügen. Zahnreihen sind aber einfacher herzustellen und bei ineinandergreifenden Zähnen erfolgt die Verstellung damit in Stufen, wobei jede einzelne Stufe durch den Abstand zweier nebeneinanderliegender Zahnspitzen bestimmt ist. Im vorliegenden Fall erlaubt jede Stufe eine Verstellung um 3,175 mm. Der Bedienungsperson ist damit die Möglichkeit eingeräumt, durch Zählen der Zähne die genaue Verstellhöhe zu bestimmen. Selbstverständlich kann an dem Stangenteil 30 auch eine entsprechende Markierung angebracht sein. Damit kein ungleichmäßiger Schnitt entsteht, sollte eine Parallelität zwischen den Rollen aller Schneideeinheiten 10 gegeben sein und jede Höheneinstellvorrichtung soll daher um dieselbe Anzahl Zähne verstellt werden, wodurch jede einzelne Schneideeinheit und alle Schneideeinheiten zusammen um denselben Betrag nach oben oder nach unten verstellt wird und werden. Für jede einzelne Schneideeinheit bedeutet dies, daß die vier Ecken des Rahmens 18 um identische Beträge verstellt werden, so daß die Schneideeinheit 10 nach der Einstellung parallel zu dem Boden ausgerichtet ist.

Bei der vorstehend beschriebenen Verstellung wurde davon ausgegangen, daß die Schraube 32 nicht aus ihrer Durchgangsöffnung 52 oder 54 in dem Stangenteil 30 entfernt wurde. Eine zweite Verstellmöglichkeit wird dadurch erreicht, daß die Schraube 32 aus ihrer Durchgangsöffnung 52 oder 54 entfernt wird und in eine andere Durchgangsöffnung 54 oder 52 gesteckt wird. Beim Ausführungsbeispiel sind in dem Stangenteil 30 zwei Durchgangsöffnungen 52 und 54 mit vertikalem Abstand vorgesehen. Soll eine relativ niedrige Schnitthöhe erreicht werden, so wird die Schraube 32 durch die obere Durchgangsöffnung 52 geführt. Diese Durchgangsöffnung befindet sich etwa in der Mitte des Stangenteils 30. Die andere Durchgangsöffnung 54 befindet sich im Bereich des bodenseitigen Endes des Stangenteils 30, und, wenn die Schraube 32 durch diese Durchgangsöffnung 54 gesteckt wird, ist eine relativ hohe Schnitthöhe erreichbar. In beiden Stellungen der Schraube 32 ist die erste Verstellmöglichkeit gegeben, bei der die beiden kurzen Reihen der Zähne 26 an dem Stehlager 22 in die Zähne 28 des Stangenteils 30 bei fest angezogener Schraube 32 eingreifen und in denen der Abschnitt 56 unterhalb der kurzen Reihen Zähne 26 gegen die Zähne 28 am Stangenteil 30 gepreßt wird.

Diese beiden Verstellmöglichkeiten können ohne Zuhilfenahme einer Justierstange auf dem Rasen vorgenommen werden. Sie sind in der Regel auch für eine Höhenverstellung im Einsatz ausreichend. Die Benutzung der Feineinstellung 38, die eine dritte Verstellmöglichkeit eröffnet und die es ermöglicht, daß jede Schneideeinrichtung 10 seitlich oder in Längsrichtung eingestellt werden kann, ist an sich auf dem Rasen nicht erforderlich. Normalerweise erfolgt die Feineinstellung bei der täglichen oder wöchentlichen Wartung in einer Werkstatt.

Andererseits erlaubt die Vorrichtung 38 für die Feineinstellung noch eine stufenlose Verstellung innerhalb der durch die Zähne 28 vorgegebenen Stufen von jeweils 3,175 mm, weshalb die Schnitthöhe ausgesprochen präzise einstellbar ist. Zur Benutzung der Feineinstellung 38 werden zunächst die Schrauben 48 und die untere Mutter 46 etwas gelockert und danach wird die obere Mutter 46 entsprechend gedreht, wobei sich die Höheneinstellvorrichtung 20 entsprechend anhebt oder absenkt. In der gewünschten Stellung werden die Muttern und Schrauben dann wieder angezogen.

Die Gewindestange 40, deren Gewinde eine präzise Fertigung erfordert, ist vorzugsweise nicht einstückig mit dem Stangenteil 30 ausgebildet, sondern mit diesem beispielsweise über einen nicht dargestellten Stift verbindbar. Auf diese Weise kann der Stangenteil 30, dessen Zähne 28 durchaus größere Toleranzen erlauben, relativ kostengünstig hergestellt werden. Entsprechendes gilt auch für das Stehlager 22 mit den kurzen Reihen Zähne 26. Selbstverständlich können die Reihen Zähne an dem Stehlager 22 auch länger ausgebildet sein, doch bringen die kurzen Reihen den Vorteil, daß etwaige Fertigungsungenauigkeiten leichter ausgeglichen werden können. Bei gleichlangen Zahnreihen oder längeren Zahnreihen könnte es vorkommen, daß die Zähne auf ihre gesamten Länge bei zu großen Toleranzen nicht hundertprozentig ineinandergreifen.

Mehrere Durchgangsöffnungen 52, 54 im Stangenteil 30 erbringen noch den weiteren Vorteil, daß die Schraube 32 immer in dem Bereich eingesetzt werden kann, in dem die Zähne ineinandergreifen, so daß das Stehlager 22 und der Stangenteil 30 sehr fest miteinander verspannt werden können. Andererseits ergeben sich durch den unterhalb der Zähne 26 am Stehlager 22 liegenden Abschnitt 56 große Oberflächenbereiche, die im angezogenen Zustand der Schraube 32 gegeneinander anliegen und die beim Aneinanderpressen auftretenden Belastungen besser verteilen.

Die Schraube 32, die als Losteil vorgesehen ist, läßt sich bei Beschädigungen leicht ersetzen, was nicht der Fall wäre, wenn sie einstückig mit dem Stangenteil 30 ausgebildet wäre. Sollte sich im Einsatz die Mutter 36 auf der Schraube 32 einmal etwas lockern, so bleibt die eingestellte Höhe der Schneideeinheit 10 dennoch erhalten, da die ineinandergreifenden Zähne 26 und 28 eine Relativbewegung zwischen Stehlager 22 und Stangenteil 30 nicht zulassen.

## Patentansprüche

1. Schneideeinheit (10) eines Mähers, insbesondere eines Spindelmähers, mit einer Vorrichtung zur Höheneinstellung der Schneideeinheit (10), die im Einsatz auf dem Boden über Roll- oder Gleitkörper (24) geführt wird, wobei an jedem Roll- oder Gleitkörper (24) mindestens ein Stehlager (22) angeschlossen ist, das mit der Schneideeinheit (10) in unterschiedlichen Höhenstellungen verbindbar ist, dadurch gekennzeichnet, daß jedem Stehlager (22) ein Stangenteil (30) zugeordnet ist, jeder Stangenteil (30) mit dem zugehörigen Stehlager (22) verspannbar ist, jedes Stehlager (22) oder jeder Stangenteil (30) wenigstens einen seitlich vorspringenden Teil aufweist, jeder Stangenteil (30) oder jedes Stehlager (22) mit wenigstens zwei übereinander angeordneten Aussparungen versehen ist, in die der seitlich vorspringende Teil einsetzbar ist, und daß jeder Stangenteil (30) mit einer Vorrichtung (38) zur Feineinstellung versehen und über diese Vorrichtung (38) mit der Schneideeinheit (10) höhenverstellbar verbunden ist.

2. Schneideeinheit nach Anspruch 1, dadurch gekennzeichnet, daß der Stangenteil (30) und das Stehlager (22) mit wenigstens einer vertikalen Reihe einander sich abwechselnder seitlicher Vorsprünge und Aussparungen versehen ist.

3. Schneideeinheit nach Anspruch 2, dadurch gekennzeichnet, daß die seitlichen Vorsprünge als Zähne (26, 28) und die Aussparungen als die zwischen den Zähnen (26, 28) liegenden Zahnlücken ausgebildet sind.

4. Schneideeinheit nach einem oder mehreren der vorherigen Ansprüche, dadurch gekennzeichnet, daß das Stehlager (22) oder der Stangenteil (30) mit einem vertikalen Langloch (49) versehen ist, durch das ein Spannelement am Stangenteil (30) oder Stehlager (22) steckbar ist.

5. Schneideeinheit nach Anspruch 4, dadurch gekennzeichnet, daß das Spannelement als Schraube (32) ausgebildet ist, die in eine von wenigstens zwei Durchgangsöffnungen (52, 54) im Stangenteil (30) oder Stehlager (22) einsetzbar ist.

6. Schneideeinheit nach einem oder mehreren der vorherigen Ansprüche, dadurch gekennzeichnet, daß das Stehlager (22) und der Stangenteil (30) mit zwei seitlichen Abstand aufweisenden vertikalen Reihen von Zähnen (26, 28) versehen sind, wobei die Zahnreihen am Stehlager (22) oder am Stangenteil (30) kürzer sind als die Zahnreihen am Stangenteil (30) oder am Stehlager (22).

7. Schneideeinheit nach Anspruch 6, die in einem Rahmen (18) angeordnet ist, dadurch gekennzeichnet, daß der Stangenteil (30) mit einer sich vertikal erstreckenden Gewinde aufweisenden Stange (40) verbunden ist, der Rahmen (18) eine die Stange (40) aufnehmende Öffnung (42) aufweist und daß die Stange (40) mit dem Rahmen (18) über zwei auf das Gewinde der Stange (40) aufschraubbare Muttern (46) verbindbar ist, von denen eine von unten und die andere von oben gegen den Rahmen (18) anliegt.

8. Schneideeinheit nach Anspruch 7, dadurch gekennzeichnet, daß der Stangenteil (30) mit dem Rahmen (18) verschraubbar ist und daß die Schraubverbindung in einem Langloch am Rahmen (18) geführt ist.

## Claims

1. Cutting unit (10) of a mower, in particular a reel mower, with a device for adjusting the height of the cutting unit (10), which in use is guided by rolling or sliding bodies (24) over the ground, wherein connected to each rolling or sliding body (24) is at least one bracket (22) which can be connected to the cutting unit (10) in different height positions, characterised in that a rod portion (30) is associated with each bracket (22), each rod portion (30) can be braced with the associated bracket (22), each bracket (22) or each rod portion (30) comprises at least one laterally projecting portion, each rod portion (30) or each bracket (22) is provided with at least two recesses arranged one above the other in which the laterally projecting portion can be inserted, and in that each rod portion (30) is provided with a device (38) for fine adjustment and is connected by this device (38) to the cutting unit (10) with adjustable height.

2. Cutting unit according to claim 1, characterised in that the rod portion (30) and the bracket (22) are provided with at least one vertical row of alternating lateral projections and recesses.

3. Cutting unit according to claim 2, characterised in that the lateral projections are designed as teeth (26, 28) and the recesses are designed as tooth gaps located between the teeth (26, 28).

4. Cutting unit according to one or more of the preceding claims, characterised in that the bracket (22) or the rod portion (30) is provided with a vertical slot (49) through which can be passed a tensioning element on the rod portion (30) or bracket (22).

5. Cutting unit according to claim 4, characterised in that the tensioning element is designed as a screw (32) which can be inserted in one of at least two through-openings (52, 54) in the rod portion (30) or bracket (22).

6. Cutting unit according to one or more of the preceding claims, characterised in that the bracket (22) and the rod portion (30) are provided with two laterally spaced-apart vertical rows of teeth (26, 28), wherein the rows of teeth on the bracket (22) or on the rod portion (30) are shorter than the rows of teeth on the rod portion (30) or on the bracket (22).

7. Cutting unit according to claim 6 which is arranged in a frame (18), characterised in that the rod portion (30) is connected to a vertically extending threaded rod (40), the frame (18) comprises an opening (42) receiving the rod (40), and in that the rod (40) can be connected to the frame (18) by two nuts (46) which can be screwed onto the thread of the rod (40) and of which one abuts against the frame (18) from below and the other from above.

8. Cutting unit according to claim 7, characterised in that the rod portion (30) can be screwed to the frame (18) and in that the screw joint extends in a slot on the frame (18).

## Revendications

1. Unité de coupe (10) d'une tondeuse, notamment d'une tondeuse à cylindre, comportant un dispositif de réglage en hauteur de l'unité de coupe (10), qui, en cours d'utilisation, est guidé sur le sol au moyen de corps roulants ou glissants (24), et dans laquelle à chaque corps roulant ou glissant (24) est raccordée au moins une chaise-palier (22) qui peut être reliée à l'unité de coupe (10) dans différentes positions en hauteur, caractérisée en ce qu'à chaque chaise-palier (22) est associé un élément en forme de barre (30), que chaque élément en forme de barre (30) peut être serré avec la chaise-palier (22) associée, que chaque chaise-palier (22) ou chaque partie en forme de barre (30) possède au moins une partie qui fait saillie latéralement, que chaque partie en forme de barre (30) ou chaque chaise-palier (22) comporte au moins deux évidements superposés, dans lesquels peut être insérée la partie qui fait saillie latéralement, et que chaque partie en forme de barre (30) est équipée d'un dispositif (38) servant à réaliser un réglage précis et est relié, avec possibilité de réglage en hauteur, à l'unité de coupe (10) par l'intermédiaire de ce dispositif (38).

2. Unité de coupe selon la revendication 1, caractérisée en ce que la partie en forme de barre (30) et la chaise-palier (22) sont pourvues au moins d'une rangée verticale de parties saillantes latérales et d'évidements latéraux, qui alternent entre eux.

3. Unité de coupe selon la revendication 2, caractérisée en ce que les parties saillantes latérales sont agencées sous la forme de dents (26,28) et les évidements sont agencés sous la forme des entre-dents situés entre les dents (26,28).

4. Unité de coupe selon une ou plusieurs des revendications précédentes, caractérisée en ce que la chaise-palier (22) ou la partie en forme de barre (30) est pourvue d'un trou allongé vertical (49), à travers lequel un élément de serrage peut être enfiché sur la partie en forme de barre (30) ou sur la chaise-palier (22).

5. Unité de coupe selon la revendication 4, caractérisée en ce que l'élément de serrage est agencé sous la forme d'une vis (32), qui peut être insérée dans l'une d'au moins deux ouvertures de passage (52,54) aménagées dans la partie en forme de barre (30) ou dans la chaise-palier (22).

6. Unité de coupe selon une ou plusieurs des revendications précédentes, caractérisée en ce que la chaise-palier (22) et la partie en forme de barre (30) sont pourvues de deux rangées verticales de dents (26,28), qui sont situées à une certaine distance latérale, les rangées de dents situées sur la chaise-palier (22) ou sur la partie en forme de barre (30) étant plus courtes que les rangées de dents situées sur la partie en forme de barre (30) ou sur la chaise-palier (22).

7. Unité de coupe selon la revendication 6, qui est disposée dans un cadre (18), caractérisée en ce que la partie en forme de barre (30) est reliée à une tige (40), qui possède un filetage qui s'étend verticalement, que le cadre (18) possède une ouverture (42) qui loge la tige (40) et que la tige (40) peut être reliée au cadre (18) par l'intermédiaire de deux écrous (46) pouvant être vissés sur le filetage de la tige (40) et dont l'un s'applique à partir du bas et l'autre à partir du haut au cadre (18).

8. Unité de coupe selon la revendication 7, caractérisée en ce que la partie en forme de barre (30) peut être vissée sur le cadre (18) et que la liaison vissée est guidée dans un trou allongé aménagé dans le cadre (18).
